# EUROPEAN PATENT SPECIFICATION

(11) **EP 2 991 425 B1**
(45) Date of publication and mention of the grant of the patent: **29.08.2018**
(21) Application number: 14788879.6
(22) Date of filing: 27.02.2014
(51) Int. Cl.: H04W 72/08

(54) **COMMUNICATION DEVICE AND BLUETOOTH COMMUNICATION SYSTEM**
KOMMUNIKATIONSVORRICHTUNG UND BLUETOOTH-KOMMUNIKATIONSSYSTEM
DISPOSITIF DE COMMUNICATION ET SYSTÈME DE COMMUNICATION BLUETOOTH

(30) Priority: 26.04.2013 JP 2013093492
(43) Date of publication of application: 02.03.2016
(73) Proprietor: Clarion Co., Ltd., Saitama-shi, Saitama 330-0081 (JP)
(72) Inventor: SUMITOMO, Yoshitaka, Saitama-shi Saitama 330-0081 (JP)
(74) Representative: J A Kemp
(86) International application number: PCT/JP2014/054864
(87) International publication number: WO 2014/174893

(56) References cited:
- EP-A1- 1 401 148
- EP-A2- 2 129 188
- WO-A1-03/098881
- WO-A1-2006/090242
- CA-A1- 2 736 444
- JP-A- 2006 148 864
- JP-A- 2006 352 522
- JP-A- 2006 352 524
- JP-A- 2006 352 799
- JP-A- 2007 281 652
- JP-A- 2009 118 313
- JP-A- 2010 153 995
- JP-A- 2013 013 012
- JP-A- 2013 013 013
- JP-A- 2013 013 015
- US-A1- 2012 203 396
- "SIMULTANEOUS USE OF HFP, A2DP, AND AVRCP PROFILES", , 8 November 2008 (2008-11-08), XP055134723, Retrieved from the Internet: URL:www.bluetooth.org [retrieved on 2014-08-14]

## Description

### TECHNICAL FIELD

The present invention relates a communication device and a Bluetooth communication system capable of executing wireless communication with a communicating party's device through Bluetooth™.

### BACKGROUND ART

WO 03/098881 A describes a method for transferring data flows between two Bluetooth devices connected via a Bluetooth Network Encapsulation Protol (L2CAP) channels. The method basically comprises detecting a data flow to be transferred and is characterized by detecting a quality of service requirement of said data flow, and establishing a L2CAP channel dedicated for said data flow, wherein said L2CAP channel meets at least said detected QoS requirement. CA 2 736 444 A describes a method and apparatus for connecting a wireless accessory to a plurality of mobile devices in a short-range wireless system. Connections between the wireless accessory and the plurality of mobile devices are established. A request for an active connection is received at the wireless accessory. The active connection is dynamically selected from the connections based on a criteria. The request is sent from the wireless accessory to a device through the active connection. A communication is established on the active connection.

Recently, a system in which a smartphone and a navigation device mounted on a vehicle and the like operate in cooperation with each other has been known. For example, a user is able to set a destination for route guidance executed by the navigation device, by performing a setting operation for a destination on the smartphone. Furthermore, the user is able to transfer audio data stored in the smartphone to the navigation device and thereby reproduce the transferred audio data through an audio unit of the navigation device by conducting an operation for designating the audio data on the navigation device or on the smartphone. Japanese Patent Provisional Publication No. 2012-221392A (hereafter, referred to as "patent document 1") describes a specific configuration of a system of this type. In the system described in the patent document 1, a navigation device and a smartphone are connected with each other through Bluetooth so as to operate in cooperation with each other. An example of a connection protocol for letting an application in the smartphone operate on the navigation device while cooperating with the smartphone under a connection environment of Bluetooth will be explained below. The navigation device transmits an SDP (Service Discovery Profile) packet containing an UUID (Universally Unique Identifier) designating an application to be cooperatively executed to, for example, a smartphone detected by 'Inquiry'. When the navigation device receives a response to the SDP packet from the smartphone, the navigation device establishes a virtual serial port for the application by a SPP (Serial Port Profile) packet. As a result, the application becomes able to operate, via the virtual serial port, under cooperation between the navigation device and the smartphone.

### SUMMARY OF THE INVENTION

However, only one virtual serial port is allowed to be established for service communication by SPP, etc. Therefore, it was impossible to let a plurality of applications operate simultaneously under cooperation between the navigation device and the smartphone.

The present invention is made in view of the above described circumstances. That is, the object of the present invention is to provide a communication device and a Bluetooth communication system having the communication device capable of letting a plurality of services operate simultaneously under cooperation between a navigation device and a smartphone. According to the present invention, there is provided a communication device as defined in appended claim 1.

A communication device according to an embodiment of the invention comprises: a free band calculation means that calculates a free band for Bluetooth™ communication based on a condition of communication with a communicating party's device; a service selection means that selects a service which can be assigned to the free band, from among a service group by a Bluetooth profile for making communication with the communicating party's device wireless, based on predetermined service selection information; a service assigning means that assigns the selected service to the free band; and a service control means that controls communication with the communicating party's device for the service assigned to the free band.

Since, according to the embodiment of the invention, a plurality of services by a profile for making communication with a communicating party's device wireless can be assigned to a free band in accordance with a vacancy condition of the band, it becomes possible to let a plurality of services, such as applications, operate cooperatively and simultaneously between the communication device and the communicating party's device.

For example, the communication device further comprises a protocol enabling simultaneously controlling a plurality of Bluetooth profiles for making the communication with the communicating party's device wireless. Selection of a service by the service selection means, assignment of a service by the service assigning means and control for communication of a service by the service control means are performed in accordance with the protocol.

The predetermined service selection information is, for example, information indicating order of priority of services to be assigned to the free band. As an example, the order of priority is order set in accordance with a user operation, predetermined order or order determined based on use frequency of the service.

The service selection means may operate to detect a service available between the communication device and the communicating party's device, and select services from among detected services in decreasing order of priority, to an extent that as many services as possible are assigned to the free band.

When there is no band to which a service by a Bluetooth profile other than a Bluetooth profile for making the communication with the communicating party's device wireless can be assigned, assignment of a service having low order of priority of the services assigned to the free band by the service assigning means may be released, and the service by a Bluetooth profile other than a Bluetooth profile for making the communication with the communicating party's device wireless may be assigned to a region secured by release of the assignment.

In an embodiment of the invention, a band required for transmission may be set for each of services.

The service by a Bluetooth profile for making the communication with the communicating party's device wireless is a service by SPP (Serial Port Profile) or HID (Human Interface Device Profile).

A Bluetooth communication system according to an embodiment of the invention comprises: the above described communication device as a master terminal; and the communicating party's device as a slave terminal.

Since, according to the embodiment of the invention, a plurality of services by a profile for making communication with a communicating party's device wireless can be assigned to a free band in accordance with a vacancy condition of the band, it becomes possible to let a plurality of services, such as applications, operate cooperatively and simultaneously between the communication device and the communicating party's device.

### BRIEF DESCRIPTION OF THE DRAWINGS

[Fig. 1] Fig. 1 is a block diagram illustrating a configuration of a Bluetooth communication system according to an embodiment of the invention.
[Fig. 2] Fig. 2 is a diagram illustrating a configuration of a navigation device constituting the Bluetooth communication system.
[Fig. 3] Fig. 3 is a diagram illustrating a configuration of a smartphone constituting the Bluetooth communication system.
[Fig. 4] Fig. 4 illustrates a protocol stack for realizing Bluetooth communication between the navigation device and the smartphone.
[Fig. 5] Fig. 5 is a flowchart illustrating Bluetooth communication executed for cooperative operation of a service between the navigation device and the smartphone.
[Fig. 6] Fig. 6 illustrates a protocol stack in another embodiment.

### EMBODIMENTS FOR CARRYING OUT THE INVENTION

In the following, a Bluetooth communication system according to an embodiment of the invention is explained with reference to the accompanying drawings.

### (Overall Configuration of Bluetooth Communication System 1)

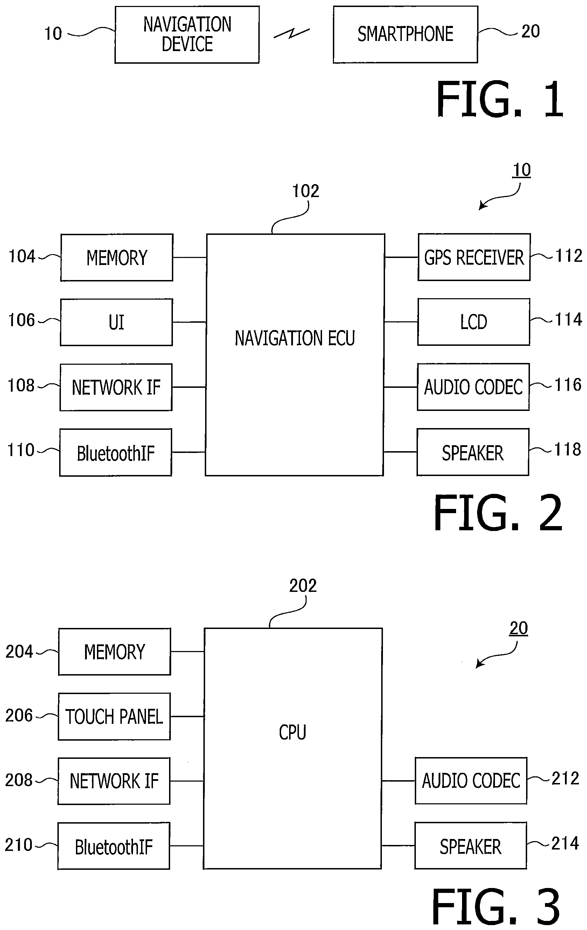

Fig. 1 is a block diagram illustrating a configuration of the Bluetooth communication system 1 according to the embodiment. As shown in Fig. 1, the Bluetooth communication system 1 includes a navigation device 10 mounted on a vehicle or the like, and a smartphone 20 owned by a passenger. A terminal device constituting the Bluetooth communication system 1 is not limited to the navigation device 10 and the smartphone 20, and may be replaced with another type of device which is able to constitute a Bluetooth network (Piconet). For example, the smartphone 20 may be replaced with a tablet PC, a notebook PC or the like capable of performing Bluetooth communication.

### (Configuration of Navigation Device 10)

Fig. 2 is a block diagram illustrating a configuration of the navigation device 10. As shown in Fig. 2, the navigation device 10 includes a navigation ECU (Electronic Control Unit) 102, a memory 104, a UI (User Interface) 106, a network IF 108, a Bluetooth IF 110, a GPS (Global Positioning System) receiver 112, an LCD (Liquid Crystal Display) 114, an audio codec 116 and a speaker 118.

The memory 104 stores various types of programs, such as, an initial program loader and a main program, and various types of data for processing by the navigation ECU 102. Immediately after power-on of the navigation device 10, the navigation ECU 102 executes the initial program loader stored in the memory 104, and initializes respective hardware units. Then, the navigation ECU 102 loads the main program stored in the memory 104 onto a predetermined work area, and executes control of the entire navigation device 10 and various types of processing by executing the loaded main program.

For example, the navigation ECU 102 executes rendering for map data read from the memory 104 and displays the map data on the LCD 114, measures a current position (i.e., a current position of the vehicle on which the navigation device 10 is mounted) based on measurement data collected at predetermined time intervals by the GPS receiver 112, and then superimposes the measured vehicle's position on the displayed map. The navigation ECU 102 periodically measures the vehicle's position based on the measurement data, and displays, on the LCD 114, the map which matches the measured vehicle's position. When the vehicle's position deviates from a route, the navigation ECU 102 searches for a route again according to Dijkstra's algorithm. Furthermore, the navigation ECU 102 is able to download the latest map data by periodically connecting to a predetermined map server on the Internet via the network IF 108.

The UI 106 is an operation means which receives an input from a user, and generates a signal corresponding to an operation input and outputs the signal to the navigation ECU 102. As the operation means of this type, various types of UIs including hardware, software or a combination of hardware and software can be cited. Specifically, the UI 106 is mechanical key switches, membrane keys, a GUI (Graphical User Interface) provided under a touch panel environment, a remote controller on which operation leys are provided, or the like.

The audio codec 116 decodes lossy compression type audio data, such as MP3 (MPEG Audio Layer-3), and reproduces the decoded audio data through the speaker 118.

### (Configuration of Smartphone 20)

Fig. 3 is a block diagram illustrating a configuration of the smartphone 20. As shown in Fig. 3, the smartphone 20 includes a CPU (Central Processing Unit) 202, a memory 204, a touch panel 206, a network IF 208, a Bluetooth IF 210, an audio codec 212 and a speaker 214.

After power-on of the smartphone 20, the CPU 202 executes an initial program loader stored in the memory 204, and initializes respective hardware units. Then, the CPU 202 loads a main program stored in the memory 204 onto a predetermined work area, and executes control of the entire smartphone 20 and various types of processing by executing the loaded main program.

The CPU 202 is able to download contents located on the Internet via the network IF 208 and display the contents on the touch panel 206, for example, by executing a Web browser stored in the memory 204 in accordance with an operation to the touch panel 206 by the user. The Web browser is software capable of interpreting, for example, HTML (Hyper Text Markup Language) 5, CSS (Cascading Style Sheets), Javascript™, etc.

In the memory 204, lossy compression type audio data, such as MP3, is stored. The audio codex 212 decodes the audio data stored in the memory 204, and reproduces the decoded audio data via the speaker 214.

### (Cooperation between Navigation Device 10 and Smartphone 20)

As shown Figs. 2 and 3, the navigation device 10 includes the Bluetooth IF 110, and the smartphone 20 includes the Bluetooth IF 210. The Bluetooth IF 110 and the Bluetooth IF 210 are communication modules for respectively connecting the navigation device 10 and the smartphone 20 to terminal devices located within a wireless communication permissible range (e.g., within 10m). In this embodiment, it is possible to cause an application to operate under cooperation between the navigation device 10 and the smartphone 20 via the respective Bluetooth IFs.

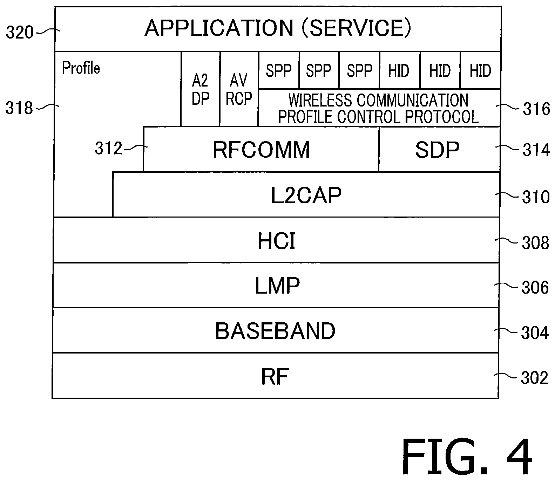

Fig. 4 schematically shows a protocol stack for realizing Bluetooth communication between the navigation device 10 and the smartphone 20 according to the embodiment. The protocol stack shown Fig. 4 is applied to both of the navigation device 10 and the smartphone 20. As shown in Fig. 4, the protocol stack includes an RF (Radio Frequency) 302, a baseband 304, a LMP (Link Manager Protocol) 306, an HCI (Host Controller Interface) 308, an L2CAP (Logical Link Control and Adaptation Protocol) 310, an RFCOMM (RFCOMMunication) 312, and SDP 314, and a wireless communication profile control protocol 316, a profile 318 and an application 320.

The RF 302 is a protocol which executes frequency modulation for a signal based on GFSK (Gaussian Frequency Shift Keying) and spread spectrum communication by frequency hopping. The baseband 304 is a protocol which executes establishment of a physical line and transmission and receipt of packets. The LMP 306 is a protocol which executes link control, such as, setting or cutting of a link. The HCI 308 is a communication protocol which exchanges data between a host and a controller, and is positioned at a boundary between hardware and software. In the navigation device 10, upper layers with respect to the HIC 308 are hosts (software parts realized mainly by the navigation ECU 102), and lower layers with respect to the HCI 308 are controllers (hardware parts formed mainly by the Bluetooth IF 110). Similarly, in the smartphone 20, upper layers with respect to the HIC 308 are hosts (software parts realized mainly by the CPU 202), and lower layers with respect to the HCI 308 are controllers (hardware parts formed mainly by the Bluetooth IF 210).

The L2CAP 310 is a protocol which sets a data transmission path (a logical channel) between connected devices. The RFCOMM 312 is a protocol which emulates a transferring function of an RS-232C serial port on the L2CAP 310. The SDP 314 is a protocol which searches for services supported by a communicating party's device on the L2CAP 310. The wireless communication profile control protocol 316 controls SPP and HID (Human Interface Device) (e.g., selection and assignment of services by these profiles, communication control, etc.) by operating on the RFCOMM 312 and the SDP 314.

The profile 318 is, for example, an audio-related profile, such as, A2DP (Advanced Audio Distribution Profile) and AVRCP (Audio/Video Remote Control Profile), and a wireless communication profile, such as, SPP and HID, for making communication with a communicating party's device wireless. The application 320 is, for example, an HTML 5 based application (hereafter, referred to as "HTML 5 application"), a NaviCon™ application, Siri (Speech Interpretation and Recognition Interface) application, a Pandora (Pandora internet radio) application, or a Smart Access™ which is a cloud type Telematics Service.

### (Connection Process for Cooperative Operation of Application)

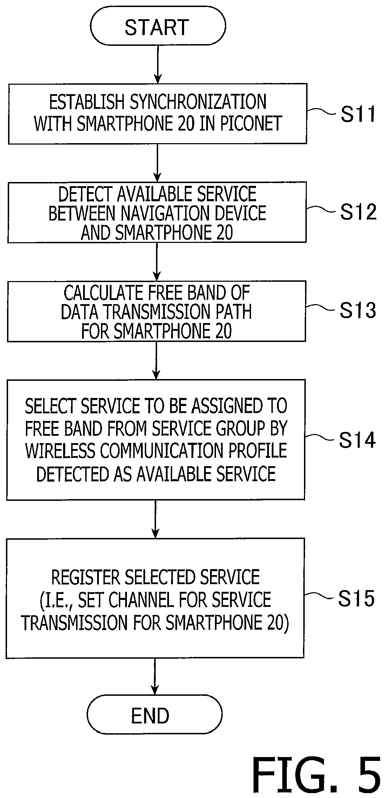

Fig. 5 is a flowchart illustrating Bluetooth communication executed for cooperative operation of a service (application) between the navigation device 10 and the smartphone 20. Explanation for die flowchart is given below assuming that the navigation device 10 is a master and the smartphone 20 is a slave.

### (S11 in Fig. 5 (Establishment of Synchronization in Piconet))

The navigation device 10 broadcasts an Inquiry packet to detect a slave located within a wireless communication permissible range. In this case, only the smartphone 20 is located within the wireless communication permissible range. Therefore, only the smartphone 20 receives the Inquiry packet, and transmits, as a response, an FHS (Frequency Hop Synchronization) packet to the navigation device 10. The FHS packet is a packet for notifying the master of slave information, and includes BD_ADDR (BLTH address), clock information and the like of its own terminal device.

The navigation device 10 tries to establish connection with the smartphone 20 by transmitting a predetermined HCI command to the BD_ADDR of the received FHS packet. When a connection request by the navigation device 10 is accepted by the smartphone 20 (e.g., when a connection permission is set), synchronization in Piconet between the navigation device 10 and the smartphone 20 is established. When the synchronization in Piconet between the navigation device 10 and the smartphone 20 is established, a physical link is constructed. Construction of a physical link includes, for example, negotiation for authentication and encryption in a baseband layer (a protocol lower than the HCI 308).

### (S12 in Fig. 5 (Detection of Available Service))

After the physical link is established, the navigation device 10 sets an L2CAP channel (a logical channel) for SDP to detect a function or a service which the smartphone 20 has. The navigation device 10 transmits an SDP packet including a predefined service ID as a search key, to the smartphone 20 on the L2CAP channel. The navigation device 10 detects a service (information such as a protocol and a profile) available between the navigation device 10 and the smartphone 20 by receiving a response to the SDP packet from the smartphone 20. After detection of a service by SDP, the navigation device 10 releases the logical channel for SDP.

### (S13 in Fig. 5 (Calculation of Free Band))

The navigation device 10 calculates a free band of a data transmission path for the smartphone 20. Two examples of calculation of the free band are explained below.

### (Calculation Example 1)

The calculation example 1 is a case where setting is made to reproduce audio data stored in the smartphone 20 through the navigation device 10. In this case, it is necessary to set a logical channel (hereafter, referred to as "audio-related channel") for an audio-related profile, such as, A2DP and AVRCP, between the navigation device 10 and the smartphone 20 in order to transmit audio data between the navigation device 10 and the smartphone 20. A required band for the audio-related channel can be calculated from, for example, a bit rate. In this embodiment, the navigation device 10 stores, as information on a required band for an audio-related channel, a value calculated based on the maximum bit rate supported by an audio file format. The navigation device 10 obtains a free band by subtracting the above described value (the required band for the audio-related channel) from the entire band of the data transmission path for the smartphone 20.

### (Calculation Example 2)

The calculation example 2 is a case where setting is made not to reproduce audio data stored in die smartphone 20 through the navigation device 10. In this case, the entire band for the smartphone 20 based on the Bluetooth standard is assigned to the free band.

In the above described two examples, the free band is calculated based on a predictable communication condition. In another example, the free band may be calculated by monitoring traffic for a predetermined period of time. Since, in another example, the free band is based on an actual communication condition, the free band can be calculated more accurately.

### (S14 in Fig. 5 (Selection of Service))

The navigation device 10 selects a service to be assigned to the free band calculated in step S13 (calculation of free band) in Fig. 5. As a service to be selected, a service is selected from a service group by the wireless communication profile, such as SPP and HID, of service groups detected in step S12 (detection of available service) in Fig. 5, based on predetermined service selection information.

For example, as a service to be selected, an HTML 5 application, a NaviCon application, a Siri application, a Pandora application, a Smart Access application, and a file transfer are cited. The SPP mainly plays a role to transmit graphics (an image) of an application, and the HID mainly plays a role to transmit UI-related control signals of an application. Basically, a band required for transmission differs depending on each service. For example, since the HTML 5 application and the Siri application treat a large amount of information, the HTML 5 application and the Siri application need a wide band. The NaviCon application, the Pandra application and the Smart Access application treat a smaller amount of information relative to, for example, the HTML 5 application, the band required by the NaviCon application, the Pandra application and the Smart Access application is narrow (note that the size of the information is presented here only for convenience of explanation and is merely an example). Therefore, a required band for transmission is set for each of services.

The predetermined service selection information is information indicating the order of priority of services to be assigned to the free band, and is defined by the wireless communication profile control protocol 316. Services are assigned to the free band in accordance with the order of priority (the service selection information) to the extent that as many services as possible are assigned to the free band. As a tendency, as the order of priority of a service having a large amount of information becomes higher, the total number of services which can be assigned to the free band decreases. As the order of priority of a service having a small amount of information becomes higher, the total number of services which can be assigned to the free band increases. Therefore, there is a case where only one service can be assigned to the free band and a case where the number of services which can be assigned to the free band is more than ten.

As an example, let us consider a case where the order of priority 1 to 10 are respectively assigned to services (applications) A to J by the wireless communication profile, and an application A (the order of priority: 1^{st} place), an application C (the order of priority: 3^{rd} place), an application E (the order of priority: 5^{th} place), an application F (the order of priority: 6^{th} place) and an application H (the order of priority: 8^{th} place) are detected as applications which can be used between the navigation device 10 and the smartphone 20. In this case, of the detected five applications, services are selected in die order of decreasing priorities to the extent data as many services as possible are assigned to the free space.

The order of priority of services is, for example,
(1) the order set by a use by operating the UI 106 of the navigation device 10;
(2) the order stored in advance as initial information at the time of shipment of the navigation device 10; or
(3) the order determined based on use frequency of services.

The example (3) of the order of priority will be supplemented. The example (3) of the order of priority is defined on the premise that each service in the smartphone has meta information regarding use frequency. In the example (3) of the order of priority, a command for requesting use frequency from a slave is defined in the wireless communication profile control protocol 316. The navigation device 10 obtains the use frequency of each service by executing the above described command during execution of step S14 (selection of service). For example, an application having higher use frequency is assigned higher priority.

### (S15 in Fig. 5 (Registration of Service))

The navigation device 10 registers the service selected in step S14 (selection of service) in Fig. 5 in accordance with the wireless communication profile control protocol 316. More specifically, the navigation device 10 sets one SPP channel (mainly for transmission of graphics) and one HID channel (mainly for transmission of operation control signals) for the service selected in step S14 in Fig. 5.

In the example shown in Fig. 4, one SPP channel and one HID channel are assigned to each of three services assigned to the free band. In the example shown in Fig. 4, by controlling three pairs of a SPP channel and a HID channel in accordance with the wireless communication profile control protocol 316, at most three services (other than services by the audio-related profile) can be executed simultaneously under cooperation between the navigation device 10 and die smartphone 20. For example, the user is able to execute the HTML 5 application under cooperation between the navigation device 10 and the smartphone 20 and to execute file transfer in the background, while setting a destination of the route guidance of the navigation device 10 by operating the NaviCon application on the smartphone 20.

The foregoing is the explanation about the embodiment of the invention. Embodiments according to the invention are not limited to the above described examples, and various types of variations can be made within the scope of the technical concept of the invention. For example, embodiments may include examples and variations described herein by way of illustration or modifications thereof combined in an appropriate manner.

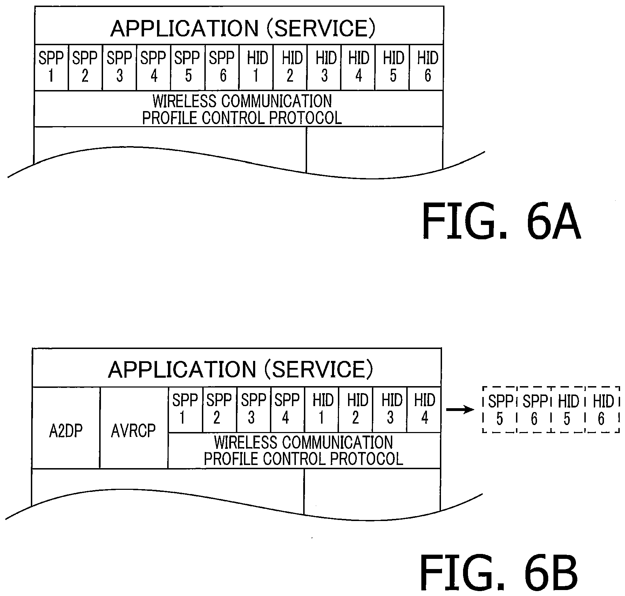

For example, in a period of time when the audio data stored in the smartphone 20 is not reproduced through the navigation device 10, a band for the audio profiled is substantially unnecessary. Therefore, in another embodiment, the entire band for the Bluetooth standard is constantly calculated as the free space without change in step S13 (calculation of free band) in Fig. 5. Accordingly, in step S14 (selection of service) in Fig. 5, service selection is made while regarding the entire band for the Bluetooth standard as an assigning range, and service registration is made in step S15 (Registration of service) in Fig. 5. Fig. 6A illustrates a state where the SPP and the HID for each service are registered within the entire band for the Bluetooth standard. In Fig. 6A, the number assigned to each of the SPP and the HID represents the order of priority of each corresponding service.

Let us consider a case where, in the example of Fig. 6A, an operation is made to reproduce the audio data stored in the smartphone 20 through the navigation device 10. In this case, the navigation device 10 judges whether there is a free band for executing a service by the audio-related profile. When there is no free band as shown in Fig. 6A, die navigation device 10 releases an SPP channel and an HID channel corresponding to a low order of priority. As a result, a band for a channel for the audio-related profile is secured, and a channel for the audio-related profile is provided in the secured band. When reproduction of the audio data is finished (e.g., when an explicit operation for terminating an audio reproduction application is made), the channel for the audio-related profile is released and an SPP channel and an HID channel for the above described service of a low order of priority is provided again in the band obtained by releasing the channel for the audio-related profile. Thus, according to the above described another embodiment, die SPP channel and the HID channel are dynamically set according to the condition of execution of services by other profiles, such as, A2DP. Since the band can be used more effectively, it becomes possible to execute more applications simultaneously under cooperation between the navigation device 10 and the smartphone 20, for example.

In the above described embodiment, a free band s calculated and the calculated free band is registered; however, in another embodiment, the number of executable services may be increased by narrowing the band of each service.

## Claims

1. A communication device (10) executing Bluetooth™ communication with a communicating party's device (20) in accordance with a Bluetooth protocol,
the communication device (10) comprising a profile control protocol (316) enabling simultaneously controlling a plurality of the same Bluetooth profiles (318) for making wireless communication between the communication device (10) and the communicating party's device (20).

2. The communication device according to claim 1, further comprising:
a free band calculation means that calculates a free band for the Bluetooth communication based on a condition of communication with the communicating party's device (20);
a service selection means that selects, in accordance with the profile control protocol (316), a service which can be assigned to the free band, from among a service group by the Bluetooth profiles (318), based on predetermined service selection information;
a service assigning means that assigns the selected service to the free band in accordance with the profile control protocol (316); and
a service control means that controls communication with the communicating party's device (20) for the service assigned to the free band in accordance with the profile control protocol (316).

3. The communication device according to claim 2, wherein the predetermined service selection information is information indicating order of priority of services to be assigned to the free band.

4. The communication device according to claim 3, wherein the order of priority is order set in accordance with a user operation, predetermined order or order determined based on use frequency of the service.

5. The communication device according to claim 3 or 4,
wherein the service selection means operates to:
detect a service available between the communication device (10) and the communicating party's device (20); and
select services from among detected services in decreasing order of priority, to an extent that as many services as possible are assigned to the free band.

6. The communication device according to any of claims 3 to 5,
wherein when there is no band to which a service by a Bluetooth profile (318) other than a Bluetooth profile (318) for making the communication with the communicating party's device (20) wireless can be assigned, assignment of a service having low order of priority of the services assigned to the free band by the service assigning means is released, and the service by a Bluetooth profile (318) other than a Bluetooth profile (318) for making the communication with the communicating party's device wireless is assigned to a region secured by release of the assignment.

7. The communication device according to any of claims 2 to 6, wherein a band required for transmission is set for each of services.

8. The communication device according to any of claims 1 to 7, wherein the service by a Bluetooth profile (318) for making the communication with the communicating party's device (20) wireless is a service by SPP (Serial Port Profile) or HID (Human Interface Device Profile).

9. A Bluetooth communication system, comprising:
the communication device (10) according to any of claims 1 to 8 as a master terminal; and
the communicating party's device (20) as a slave terminal.

## Patentansprüche

1. Kommunikationsvorrichtung (10), die Bluetooth™-Kommunikation mit einer Vorrichtung einer kommunizierenden Partei (20) in Übereinstimmung mit einem Bluetooth-Protokoll ausführt,
wobei die Kommunikationsvorrichtung (10) ein Profilsteuerungsprotokoll (316) umfasst, das ein simultanes Steuern einer Vielzahl der gleichen Bluetooth-Profile (318) ermöglicht, um eine drahtlose Kommunikation zwischen der Kommunikationsvorrichtung (10) und der Vorrichtung einer kommunizierenden Partei (20) herzustellen.

2. Kommunikationsvorrichtung nach Anspruch 1, ferner umfassend:
ein Berechnungsmittel für ein freies Band, das ein freies Band für die Bluetooth-Kommunikation basierend auf einem Zustand der Kommunikation mit der Vorrichtung einer kommunizierenden Partei (20) berechnet;
ein Dienstauswahlmittel, das in Übereinstimmung mit dem Profilsteuerungsprotokoll (316) einen Dienst, der dem freien Band zugeordnet werden kann, aus einer Dienstgruppe durch die Bluetooth-Profile (318) basierend auf vorbestimmten Dienstauswahlinformationen auswählt;
ein Dienstzuordnungsmittel, das dem freien Band den ausgewählten Dienst in Übereinstimmung mit dem Profilsteuerungsprotokoll (316) zuordnet; und
ein Dienststeuerungsmittel, das die Kommunikation mit der Vorrichtung einer kommunizierenden Partei (20) für den Dienst steuert, der dem freien Band in Übereinstimmung mit dem Profilsteuerungsprotokoll (316) zugeordnet ist.

3. Kommunikationsvorrichtung nach Anspruch 2, wobei die vorbestimmten Dienstauswahlinformationen Informationen sind, die eine Prioritätsreihenfolge von Diensten anzeigen, die dem freien Band zugeordnet werden sollen.

4. Kommunikationsvorrichtung nach Anspruch 3, wobei die Prioritätsreihenfolge eine Reihenfolge ist, die in Übereinstimmung mit einem Benutzerbetrieb, einer vorbestimmten Reihenfolge oder einer Reihenfolge, die basierend auf der Benutzungsfrequenz des Dienstes bestimmt ist, festgelegt ist.

5. Kommunikationsvorrichtung nach Anspruch 3 oder 4,
wobei das Dienstauswahlmittel zu Folgendem arbeitet:
Erfassen eines verfügbaren Dienstes zwischen der Kommunikationsvorrichtung (10) und der Vorrichtung einer kommunizierenden Partei (20); und
Auswählen von Diensten aus erfassten Diensten in abnehmender Prioritätsreihenfolge in einem Maße, dass dem freien Band so viele Dienste wie möglich zugeordnet sind.

6. Kommunikationsvorrichtung nach einem der Ansprüche 3 bis 5,
wobei, wenn es kein Band gibt, dem ein Dienst durch ein Bluetooth-Profil (318) außer einem Bluetooth-Profil (318) zum drahtlos Machen der Kommunikation mit der Vorrichtung einer kommunizierenden Partei (20) zugeordnet werden kann, eine Zuordnung eines Dienstes mit einer niedrigen Prioritätsreihenfolge der Dienste, die dem freien Band durch das Dienstzuordnungsmittel zugeordnet sind, freigegeben wird, und der Dienst durch ein Bluetooth-Profil (318) außer einem Bluetooth-Profil (318) zum drahtlos Machen der Kommunikation mit der Vorrichtung einer kommunizierenden Partei einem Bereich zugeordnet ist, der durch die Freigabe der Zuordnung gesichert ist.

7. Kommunikationsvorrichtung nach einem der Ansprüche 2 bis 6, wobei ein Band, das zur Übertragung erforderlich ist, für jeden der Dienste festgelegt ist.

8. Kommunikationsvorrichtung nach einem der Ansprüche 1 bis 7, wobei der Dienst durch ein Bluetooth-Profil (318) zum drahtlos Machen der Kommunikation mit der Vorrichtung einer kommunizierenden Partei (20) ein Dienst durch SPP (Serial-Port-Profil) oder HID (Human Interface Device-Profil) ist.

9. Bluetooth-Kommunikationssystem, umfassend:
die Kommunikationsvorrichtung (10) nach einem der Ansprüche 1 bis 8 als ein Master-Endgerät; und
die Vorrichtung einer kommunizierenden Partei (20) als ein Slave-Endgerät.

## Revendications

1. Dispositif de communication (10) effectuant une communication Bluetooth™ avec un dispositif d'un correspondant en communication (20) conformément à un protocole Bluetooth,
le dispositif de communication (10) comprenant un protocole de commande de profil (316) permettant la commande simultanée d'une pluralité de profils Bluetooth (318) identiques destinés à effectuer une communication sans fil entre le dispositif de communication (10) et le dispositif du correspondant en communication (20).

2. Dispositif électronique selon la revendication 1, comprenant en outre :
un moyen de calcul de bande libre qui calcule une bande libre pour la communication Bluetooth en fonction d'une condition de communication avec le dispositif d'un correspondant en communication (20) ;
un moyen de sélection de service qui sélectionne, conformément au protocole de commande de profil (316), un service qui peut être attribué à la bande libre, dans un groupe de services par les profils Bluetooth (318), en fonction d'informations de sélection de service prédéterminé ;
un moyen d'affectation de service qui attribue le service sélectionné à la bande libre conformément au protocole de commande de profil (316) ; et
un moyen de commande de service qui commande la communication avec le dispositif d'un correspondant en communication (20) pour le service attribué à la bande libre conformément au protocole de commande de profil (316).

3. Dispositif de communication selon la revendication 2, dans lequel les informations de sélection de service prédéterminé sont des informations indiquant l'ordre de priorité de services devant être attribués à la bande libre.

4. Dispositif de communication selon la revendication 3, dans lequel l'ordre de priorité est un ordre défini conformément à une opération d'utilisateur, un ordre prédéterminé ou un ordre déterminé en fonction d'une fréquence d'une utilisation du service.

5. Dispositif de communication selon la revendication 3 ou 4,
dans lequel le moyen de sélection de service fonctionne pour :
détecter un service disponible entre le dispositif de communication (10) et le dispositif d'un correspondant en communication (20) ; et
sélectionner des services parmi les services détectés dans l'ordre de priorité décroissant, dans la mesure où autant de services que possible sont attribués à la bande libre.

6. Dispositif de communication selon l'une quelconque des revendications 3 à 5,
dans lequel lorsqu'il n'y a pas de bande à laquelle un service par un profil Bluetooth (318) autre qu'un profil Bluetooth (318) destiné à effectuer la communication avec le dispositif d'un correspondant en communication (20) sans fil peut être attribué, l'affectation d'un service présentant un ordre de priorité faible des services attribués à la bande libre par le moyen d'affectation de service est libérée, et le service par un profil Bluetooth (318) autre qu'un profil Bluetooth (318) destiné à effectuer la communication avec le dispositif d'un correspondant en communication sans fil est attribué à une région fixée par libération de l'affectation.

7. Dispositif de communication selon l'une quelconque des revendications 2 à 6, dans lequel une bande requise pour la transmission est définie pour chacun des services.

8. Dispositif de communication selon l'une quelconque des revendications 1 à 7, dans lequel le service par un profil Bluetooth (318) destiné à effectuer la communication avec le dispositif d'un correspondant en communication (20) sans fil est un service par SPP (profil de port série) ou HID (profil de dispositif d'interface humaine).

9. Système de communication Bluetooth, comprenant :
le dispositif de communication (10) selon l'une quelconque des revendications 1 à 8 en tant que terminal maître ; et
le dispositif d'un correspondant en communication (20) en tant que terminal esclave.
